# EUROPEAN PATENT APPLICATION

(11) **EP 2 492 403 A2**
(43) Date of publication of application: **29.08.2012**
(21) Application number: 12156337.3
(22) Date of filing: 21.02.2012
(51) Int. Cl.: E02F 3/90, E02F 5/28, E02F 7/06, E02F 3/92

(54) **Method and apparatus for purging sludge from the bottom of a water area**

(30) Priority: 22.02.2011 FI 20115169
(71) Applicant: Purgotec OY, 01820 Klaukkala (FI)
(72) Inventor: Komulainen, Arto, FI-00100 Helsinki (FI); Komulainen, Risto, FI-01820 Klaukkala (FI)
(74) Representative: Heinänen, Pekka Antero

(57) **Abstract**

Method for purging sludge from the bottom of a water area, more particularly by suction dredging, in which method the bottom sludge is pumped with an underwater pump to the shore, to a barge or similar, and in which method the pump (4) is mechanically connected to a body (21) floating on the water surface (3), wherein the floating body (21) is unmanned during the dredging work, and the dredged sludge is processed during the dredging work in a pre-dryer (27), which removes at least 50% by volume of the water contained in the pumped sludge as a continuous process, and the removed water is led back into the water area.

## Description

### FIELD OF TECHNOLOGY

The present invention relates to a method for purging sludge from the bottom of a water area, more particularly by dredging. In the method the sludge is pumped from the bottom to the shore, to a barge or similar with an underwater pump, which is connected to a floating body. This invention also relates to an apparatus implementing the method.

### PRIOR ART

The accumulation of excess material on the bottom of water areas is a widespread problem, which causes e.g. eutrophication, silting, an increase of underwater vegetation, deterioration of the landscape, and odor problems. The silting of riverbeds may increase the nuisances caused by heavy rains.

In order to decrease the nuisances it is natural to convey the excess material from the bottom of a water area to another location, normally to the shore. This material conveying is called dredging, with many known alternative methods.

One general method is to use an excavator, disposed on shore or on a ferry, for raising material from the bottom to shore or e.g. to a barge, one bucket at a time. In this method the bottom sludge will be quite much mixed with the clear water, because a large part of the moist sludge will be poured back from the bucket into the water.

Another general method is suction dredging, wherein the sludge is pumped from the bottom to the shore in a tube. It is known, e.g. from patent publications DE 10212297, JP 2008223433 and JP 58091235, to place a dredging pump with its control mechanism on a floating body. The suction dredging method normally requires an extensive reservoir on shore, separated from the water area, into which the wet sludge can be pumped for as long a time as is needed for the sludge to settle, after which the clear water is allowed to spill back into the water area.

One drawback, especially with excavator-based methods, is the heavy equipment, which requires heavy transportation equipment, a good road ashore and a lot of personnel, respectively, all of which raise the costs.

The sludge reservoir is a significant drawback or even a direct impediment for the suction dredging method because, according to the normal dimensioning rule, the volume of the reservoir should be at least three times the volume of the pumped mixture of sludge and water, and this size of extra space is quite seldom available on shore.

### SUMMARY OF THE INVENTION

The aim of the present invention is to provide a novel method and apparatus for suction dredging. With this method, the aforementioned disadvantages will be avoided and purging of the bottom of a water area from sludge with light and effective apparatus at low costs will be enabled. The aim is achieved with a method and arrangement according to the present invention, which are characterized by what is stated in the independent claims. Other preferred embodiments of the invention are disclosed in the dependent claims.

The present invention is based on a suction dredging method, wherein the underwater dredging pump and motor are connected to an unmanned floating body, moving automatically on the water area to be purged. During the dredging work the control unit of the dredger controls the location of the floating body and the depth location of the pump according to the progress of the work. The material dredged from the bottom of the water area is led in a tube onto the shore.

The movement of the floating body within the water area to be dredged may be arranged e.g. with a propeller, placed onto the floating body, or with a rotating apparatus connected to the pump, which rotating apparatus walks on the bottom of the water area.

The positioning of the floating body within the water area to be purged may be arranged e.g. by using a wireless connection to GPS satellites or to a reference point on shore. Positioning based on measured compass direction and distance to a reference point on shore is also possible.

The control unit of the dredger needs information about the start and stop depth of the dredging work for the whole dredging area. This information may be ascertained before starting the work, e.g. manually with a stick or with an echo sounder or similar.

The depth positioning of the pump during the work may be based e.g. on the distance to the bottom measured with an echo sounder, or the depth may be increased step by step from the start depth to the stop depth according to the progress of the work. The maximum depth limit information for the pump can be ascertained e.g. with the depth measurement from a pressure sensor fixed onto the pump or by measuring the length of the winch wire that raises the pump.

The control unit of the dredger takes care of all necessary control functions, such as control of the pump depth, positioning of the floating body and processing of the feedback signals from e.g. the pressure sensor, from the echo sounder or from GPS satellites. The control unit may be placed on the floating body, or its functions may be divided between sub-units disposed on the floating body and on shore. In the second case the communication between the sub-units may be arranged either wirelessly or e.g. using the power line between the aggregate on shore and the floating body.

According to the present invention the sludge dredged from the bottom of the water area is led in a tube onto the shore, where it may be pre-dried continuously while new sludge is pumped from the tube. Pre-drying in this context means a continuous process, wherein the water content of the sludge decreases so that the remaining moist solid material can be placed on piles, inside sacks or in any other suitable repository without a risk of harmful leaking back to the water area.

During the pre-drying process the water, separated from the sludge and still containing the finest-grained parts of the mud, pours back into the water area. Owing to the pre-drying, the dredged sludge does not need any extensive reservoir for water clarifying, but instead it accumulates next to the pre-dryer. Because of the accumulation, the pre-dryer must be relocated occasionally, or alternatively the pre-dried sludge must be transferred away during the work.

It is, of course, also possible to use a reservoir according to known technology when such is available.

There are several ways to implement the pre-drier.

According to one embodiment the dredged sludge is led onto the shore inside an area surrounded by e.g. a filter textile, from where the extra water leaks away through a separate filter that can be replaced "on-the-fly" if the surrounding filter textile clogs.

Another embodiment of the pre-drier is to use a screw conveyor, wherein the wet sludge is led to its input edge and the pre-dried sludge exits from the output edge, and wherein most of the water leaks away through the holes in the conveyor tube surrounding the screw. The choking of the holes can be prevented by using a brush band fixed onto the outermost circle of the conveyor screw.

Another embodiment of the pre-drier is a band conveyor, wherein the sludge is led onto the input edge of a wide, water-permeable circulating band. Most of the water then leaks away through the holes in the band, and the pre-dried sludge can be scraped off at the end of the circulating band.

The most advantageous drive means for the pump and the pre-drier are electric motors, which are supplied e.g. by an aggregate. When the aggregate is placed on shore, the power cable between it and the underwater motor connected to the floating body can be attached to the sludge tube. It is also possible to place the aggregate on the floating body, or to use e.g. combustion engines.

The weight of the dredging apparatus according to the present invention is low because of the unmanned floating body and because separate members of the system can be connected to each other on shore. Thus it can be carried to the working place even manually, which makes it useful in rough terrain. The floating body is automatically controlled, which makes it capable of continuous operation regardless of time or weather conditions. The on-shore parts of the system, such as the pre-drier and the aggregate, need personnel activity only occasionally e.g. for filling the fuel tank, which decreases personnel costs. The present invention thus makes it possible to purge the bottoms of water areas economically, which promotes the spread of environmental protection.

### BRIEF DESCRIPTION OF THE DRAWINGS

In the following the invention will be described in more detail by the aid of some examples of its most preferred embodiments with reference to the attached drawings, wherein
Fig. 1 presents a prior-art suction dredging apparatus,
Fig. 2 presents a suction dredging apparatus according to the present invention,
Figs. 3A and 3B present arrangements for moving the floating body on a water area,
Figs. 4A and 4B present arrangements for positioning the body floating on a water area,
Fig. 5 presents an arrangement for measuring the depth position of the pump, and
Figs. 6 - 8 present embodiments of pre-driers.

### DETAILED DESCRIPTION OF THE INVENTION

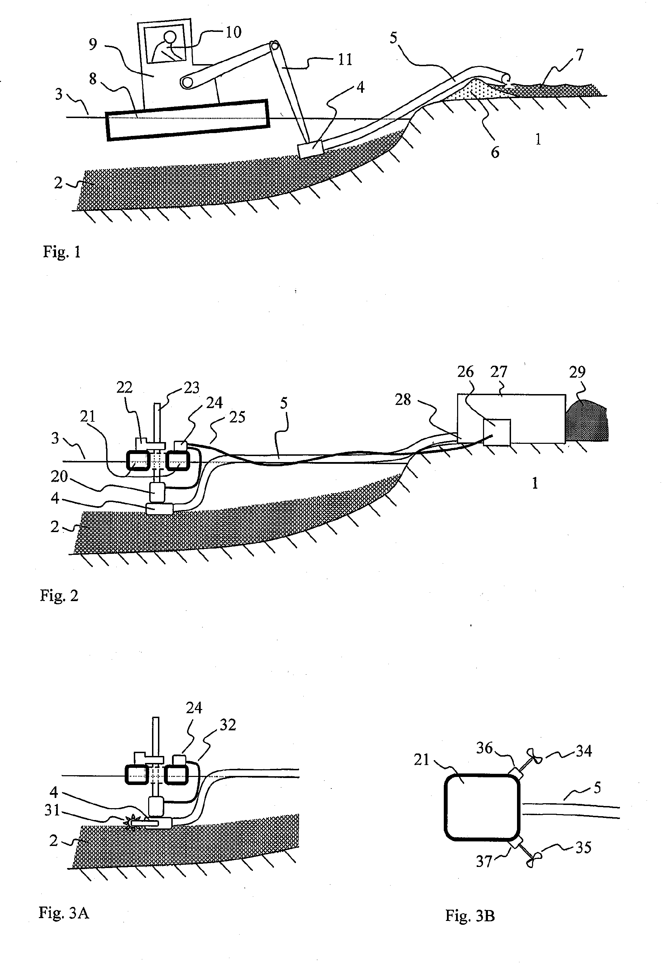

Fig. 1 presents a known suction dredging method and arrangement, wherein an excavator 9 or similar, controlled by a driver 10, is disposed on a body 8 floating on a water surface 3. A suction dredging pump 4, which is connected to the arm 11 of the excavator, pumps sludge 2, which is forced by the pump pressure to move in the tube 5 to the reservoir 7. The reservoir is situated on the shore 1, where a barrage 6 prevents the mixture of water and sludge from pouring back. The driving force for the pump 4 may be e.g. the hydraulic system of the excavator.

Fig. 2 presents the operating principle of the dredger according to the present invention. Here the suction dredging pump 4 is connected via a support rod 23 to an unmanned body 21 floating on the water surface 3, which support rod 23 can be used for adjusting the depth position of the pump by means of the hoist 22. The hoist 22 can be implemented in various ways within the scope of the same inventive concept, e.g.:
- the rod 23 can be toothed and the hoist 22 has a gear wheel for adjusting the depth position,
- the number of rods 23 and hoists 22 may be greater than one,
- the rods 23 may be plain, used only to align the pump, and the actual vertical position adjustment is performed with a winch and a rope, assembled by the side of the rods (not presented).

The motor 20, supplying the driving force to the suction dredging pump 4, is connected next to the pump to the same rod 23. A preferred motor type in this application is an electric motor, but other types, e.g. a hydraulic motor, are also possible. As presented in the example of Fig. 2, the electric power for the motor is supplied by an aggregate 26 on the shore via a power cable 25, attached to the sludge tube 5. The cable is first connected to the connection box 24 and further to the motor 20. It is also possible to dispose the aggregate on the floating body.

According to the invention, the sludge is pumped in the tube 5 first to the input edge 28 of the pre-drier 27, which separates water from the sludge to the extent that the pre-dried waste sludge 29 coming out from the output edge of the pre-drier is solid enough to stay in place without risk of said sludge pouring back into the water area. Thus, the system does not need any reservoir as the known methods do. After being separated from the sludge inside the pre-drier, the water is led back into the water area.

Figs. 3A and 3B present two principles for how to create the moving force for positioning the floating body within the dredging area. Parts that are not relevant from viewpoint of moving the body are not presented in the figures.

According to Fig. 3A a rotating wheel 31, connected to the pump 4, has radial teeth or spikes, which when penetrating the sludge 2 create a moving force for the pump and thus also for the floating body. The driving motor of the wheel (not presented) may be connected to the connection box 24 e.g. via the same electric power cable 32 as the driving motor of the pump 4.

In the principle according to Fig. 3B, two propellers 34, 35, receiving their rotating force from the motors 36, 37, are connected to the floating body 21. By controlling the rotating directions and rotating speeds of the propellers, the floating body can be made to move in the desired direction. It is also possible to control the direction of movement of the floating body with only one propeller that can turn 360° (so-called Azipod).

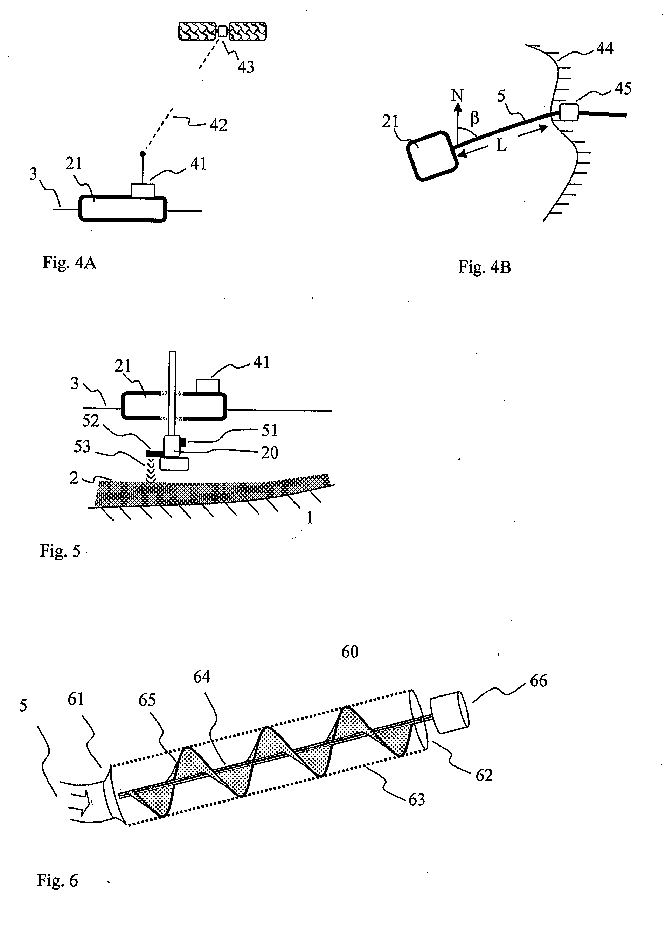

Figs. 4A and 4B present two principles for how the control unit of the dredger can be continuously aware of the location of the floating body in the dredging area.

Fig. 4A presents a known positioning method, wherein a navigator 41 on the floating body 21 has a signal connection 42 to a GPS (Global Positioning System) satellite 43.

In the positioning method according to Fig. 4B, the compass direction β of the sludge tube 5 and its length L to the reference point 45 on the shore 44 are measured. The reference point 45 is preferably the tube transferring station 45, which pushes the tube step by step towards the water area (i.e. increases the length L) according to the progress of the dredging work. The positioning method is based on the fact that the pressure inside the tube keeps said tube sufficiently straight for the position of the floating body to be determined with a known vector calculation based on the length and direction of the tube. The measurement of the tube length between the floating body and the tube transferring station 45 may be based e.g. on an indirect method, wherein the control unit of the dredger calculates the number of steps by which the length of the tube has been increased. This is possible because the control unit gives all the commands for increasing the steps of the tube length.

The distance from the dredging pump to the water surface and to the bottom of the water area must be known by the dredger control unit in order to be able to adjust the pump depth position correctly.

Fig. 5 presents an example of an automatic depth measurement, wherein the control unit 41, placed on the body floating on the water surface, is in e.g. a wireline connection (wire not shown in the figure) with the pressure sensor 51 and with the echo sounder 52, both of which are attached to the motor 20. The measuring result of the pressure sensor is directly proportional to the distance between the water surface 3 and the sensor. The echo sounder 52 sends an acoustic signal 53, which is reflected back from the bottom, and from this reflection the distance between the sensor and the bottom, possibly also even the depth of the mud 2 level thickness, can be calculated, as is well known.

Within the same inventive concept the distance from the water surface to the bottom, and the thickness of the mud level may be measured manually e.g. by using a measuring stick in some points within the area to be dredged. This information may then be programmed into the control unit of the dredger, which interpolates the depth information between the known points.

According to the present invention the sludge, pumped in a tube from the dredging pump on shore, will be pre-dried so that it does not flow back into the water area. This means that at least 50% by the volume of the water contained in the sludge is removed in the pre-dryer.

Fig. 6 presents an example of the pre-dryer 60, where the input edge 61 is connected to the sludge tube 5. The pre-dryer contains a conveying screw 65, which is rotated around its shaft 64 inside a punched conveying tube 63 by a motor 66. In the pre-dryer, the sludge is conveyed to the output end 62. Most of the water content of the sludge leaks out from the tube 63 through the conveying tube holes.

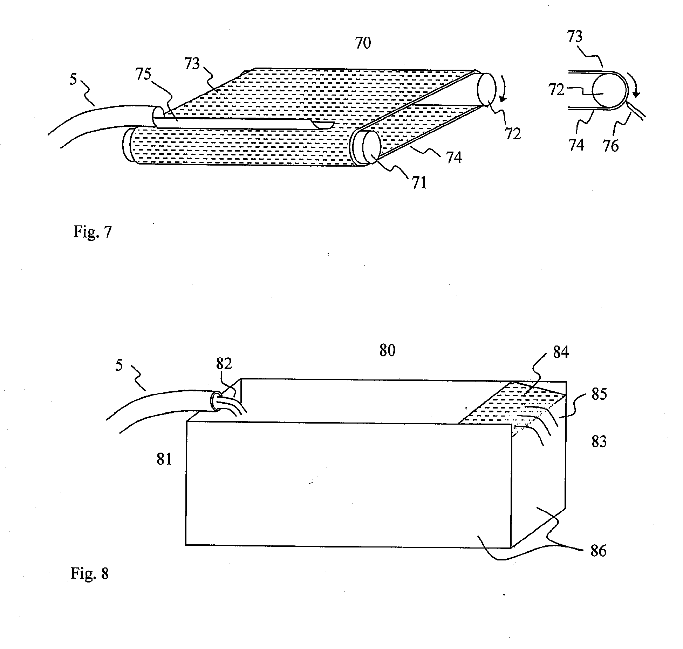

Fig. 7 presents another example of a pre-dryer 70, which has two rotating prolate rollers 71, 72, and a punched flexible dryer band 77 between them. The wet sludge coming from the dredger tube 5 is led onto essentially the whole width of the band e.g. by using a chute 75 on the top side 73 at the input end of the dryer band (roller 71). The band conveys the sludge to the output end (roller 72) while most of the sludge water leaks through the holes in the conveying band. This separated water can then be collected with a chute (not shown), placed between the top side 73 and underside 74 of the band, in order to lead it back into the water area. The pre-dried sludge can be removed from the conveyor band at its output end with a scraper 76.

Fig. 8 presents another example of the pre-dryer 80, which is a fenced area 86 surrounded by e.g. a flexible material, wherein the wet sludge 82 is led from the tube 5 into the input end 81 and the excess water 85 spills out from the output end 83 through a filter 84, placed at a lower vertical level than the upper edge of the fence 86. While the water drifts from the input end 81 to the output end 83, most of the solid sludge material settles onto the bottom of the pre-dryer. Because the filter 84 prevents most of the remaining fine-grained solid material from coming out of the pre-dryer, the exiting water is quite clear and it can be led back into the water area.

Although the invention has been described with reference to the embodiments above, it should be recognized that the invention is not limited solely to these embodiments, and many modifications and variations will become apparent to persons skilled in the art without departing from the scope and spirit of the invention, as defined in the appended claims.

Characteristic features of the invention, presented in the description possibly in connection with other characteristic features, may be used also separately.

## Claims

1. Method for purging sludge from the bottom of a water area, more particularly by suction dredging, in which method the bottom sludge is pumped with an underwater pump to the shore, to a barge or similar, and in which method the pump (4) is mechanically connected to a body (21) floating on the water surface (3),
**characterized in that**
the floating body (21) is unmanned during the dredging work, and the dredged sludge is processed during the dredging work in a pre-dryer (27, 60, 70, 80), which removes at least 50% by volume of the water contained in the pumped sludge as a continuous process, and the removed water is led back into the water area.

2. Method according to claim 1,
**characterized in that**
the position of the floating body (21), the vertical underwater position of the pump (4), and the sensors measuring the position of the floating body and the position of the pump with respect to the water bottom and the water surface are controlled by a control unit, which may be situated on the floating body or it can be divided into sub-units disposed on the floating body and on the shore

3. Method according to claim 1 or 2,
**characterized in that**
information about the water area to be dredged, such as the outer limits of the area, the depth of the water and the depth of the sludge are pre-programmed into the control unit.

4. Method according to any of claims 1 - 3 above,
**characterized in that**
the position of the floating body (21) is defined by satellite navigation (41-43) or by a vector calculation based on the compass direction (β) of the tube (5) and on the length (L) of tube between the floating body (21) and the tube transferring station (45) on shore.

5. Method according to any of claims 1 - 4 above,
**characterized in that**
the moving force for positioning the floating body (21) within the area to be dredged is created by a rotating wheel (31), having radial teeth or spikes and connected to the pump (4), or by at least one propeller (34, 35), rotated by a motor (36, 37) and connected to the floating body (21).

6. Method according to any of claims 1 - 5 above,
**characterized in that**
the distance of the pump (4) from the bottom of the water area is measured with an echo sounder (52) and the distance of the pump from the water surface is measured with a pressure sensor (51).

7. Apparatus for purging sludge from the bottom of a water area, more particularly with a suction dredging method, wherein the sludge is pumped via a tube to the shore, to a barge or similar with an underwater pump (4), which is mechanically connected to a body (21) floating on the water surface (3),
**characterized in that**
the floating body (21) is unmanned during the dredging work, and the dredged sludge is processed during the dredging work in a pre-dryer (27, 60, 70, 80), which removes at least 50% by volume of the water contained in the pumped sludge as a continuous process, and the removed water is led back into the water area.

8. Apparatus according to claim 7,
**characterized in that**
the position of the floating body (21), the vertical underwater position of the pump (4), and the sensors measuring the position of the floating body and the position of the pump with respect to the water bottom and the water surface are arranged to be controlled by a control unit, which may be situated on the floating body or it can be divided into sub-units disposed on the floating body and on the shore

9. Apparatus according to any of claims 7 - 8,
**characterized in that**
the pump (4), the driving motor (20) of the pump and the floating body (21) are connected to each other by at least one vertical support rod (23), and the depth position of the pump is adjusted either with a hoist (22), having a gear wheel when the support rod is toothed, or with a winch and rope assembled by the side of at least one plain rod.

10. Apparatus according to any of claims 7 - 9,
**characterized in that**
the pre-drier (27, 60) includes a conveying screw (65), which is arranged to rotate around its shaft (64) inside a punched conveying tube (63), and which screw conveys the pumped sludge from the input edge (61) to the output edge (62) while most of the water content of the sludge leaks out from the tube through the tube holes.

11. Apparatus according to any of claims 7 - 9,
**characterized in that**
the pre-drier (27, 70) includes two rotating prolate rollers (71, 72), and a punched flexible dryer band (77) between them, and the wet sludge is arranged to be spread onto essentially the whole width of the band on the top side (73) of the band at the input end of the dryer band, and the sludge is arranged to be conveyed by the rotating band to the output end while most of the sludge water leaks through the holes in the conveying band, and the pre-dried sludge is arranged to be removed from the conveyor band at its output end with a scraper (76).

12. Apparatus according to any of claims 7 - 9,
**characterized in that**
the pre-drier (27, 80) includes a fenced area (86) surrounded by e.g. a flexible material, wherein the wet sludge (83) is arranged to be led from the tube (5) to the input end (81) and the extra water (85) is arranged to spill out from the output end (83) through a filter (84), placed at a lower vertical level than the upper edge of the fence (86).
